# EUROPÄISCHE PATENTANMELDUNG

(11) **EP 0 987 924 A2**
(43) Veröffentlichungstag der Anmeldung: **22.03.2000**
(21) Anmeldenummer: 99115868.4
(22) Anmeldetag: 12.08.1999
(51) Int. Cl.: H05B 7/00

(54) **Lichtbogen-Schmelzofen**

(30) Priorität: 26.08.1998 DE 19838683
(71) Anmelder: Schütz-Dental GmbH, 61191 Rosbach (DE); Midhat, Selimovic, 2312 Olehova-Vas (SI)
(72) Erfinder: Kranjc, Josef, 61231 Bad Nauheim (DE); Selimovic, Midhat, 2312 Olehova-Vas (SI)
(74) Vertreter: Schlagwein, Udo, Dipl.-Ing.

(57) **Zusammenfassung**

Ein Lichtbogen-Schmelzofen hat eine Schmelzelektrode (8), welche während des Betriebs des Lichtbogen-Schmelzofens relativ zu einem Schmelztiegel (6) höhenverstellbar ist und um eine vertikale Drehachse (12) rotiert. Zu dieser Drehachse (12) ist die Schmelzelektrode (8) in eine exzentrische Position verstellbar. Unterhalb des Schmelztiegels (6) befindet sich eine Gussmuffel (19), welche von einem pneumatischen Zylinder (23) gegen eine Trennwand (3) dichtend vorgespannt wird.

## Beschreibung

Die Erfindung betrifft einen Lichtbogen-Schmelzofen mit einer oberhalb eines Schmelztiegels angeordneten Schmelzelektrode, welche zur Erzeugung eines Lichtbogens zwischen der Schmelzelektrode und im Schmelztiegel eingefülltem Schmelzgut mit einem elektrischen Pol eines Leistungsgenerators Verbindung hat.

Lichtbogen-Schmelzöfen der vorstehenden Art werden in der Dentaltechnik zum Schmelzen dentaler Werkstoffe verwendet, die anschließend zur Erzeugung dentaler Gusskörper in eine Gussmuffel vergossen werden. Die Schmelzelektrode ist bei den bekannten Lichtbogen-Schmelzöfen mittig zum Schmelztiegel in einem solchen Abstand angeordnet, dass es durch Hochfahren der elektrischen Spannung zu einem Lichtbogen zwischen der Schmelzelektrode und dem Schmelzgut kommt, durch den das Schmelzgut anschließend geschmolzen wird.

Nachteilig bei den bekannten Lichtbogen-Schmelzöfen ist es, dass die elektrische Energie durch den Lichtbogen auf einen verhältnismäßig kleinen Bereich in der Mitte des Schmelztiegels begrenzt ist. Das kann bei manchen Werkstoffen, beispielsweise Gold, zu Überhitzungen des Schmelzgutes führen. Diese könnte man vermeiden, wenn in solchen Fällen der Abstand der Schmelzelektrode vom Schmelzgut größer wäre, jedoch entstünde dann das Problem, dass der Lichtbogen nicht mehr oder erst bei unerwünscht hohen Spannungen zünden würde.

Der Erfindung liegt das Problem zugrunde, einen Lichtbogen-Schmelzofen der eingangs genannten Art so auszubilden, dass es zu einem möglichst gleichmäßigen Schmelzen des Schmelzgutes ohne eine Überhitzungsgefahr im unmittelbaren Bereich des Lichtbogens kommt und bei dem zum Zünden des Lichtbogens keine unerwünscht hohen Spannungen erforderlich sind.

Dieses Problem wird erfindungsgemäß dadurch gelöst, dass die Schmelzelektrode während des Arbeitens des Lichtbogen-Schmelzofens vertikal zu dem Schmelztiegel verstellbar und mittels eines Motors um eine vertikal verlaufende Drehachse drehbar ausgebildet ist und zusätzlich radial zu ihrer Drehachse verstellbar angeordnet ist.

Durch die vertikale Verstellbarkeit der Schmelzelektrode während des Betriebs des Lichtbogen-Schmelzofens kann man zunächst die elektrische Spannung relativ gering einstellen und dann einen Lichtbogen zünden. Danach kann man die Spannung hochfahren und dabei entsprechend den Abstand der Schmelzelektrode vom Schmelzgut erhöhen. Durch den zunehmenden Abstand der Schmelzelektrode vom Schmelzgut wird ein relativ großer Bereich des Tiegels vom Lichtbogen unmittelbar aufgeheizt, so dass das Schmelzgut gleichmäßig erwärmt wird und lokale Überhitzungen ausgeschlossen sind. Die Erfindung erlaubt es weiterhin, durch Wahl des Abstandes der Schmelzelektrode vom Schmelzgut die Temperatur der das Schmelzgut schmelzenden Energiequelle unterschiedlichem Schmelzgut anzupassen.

Die Energieverteilung im Lichtbogen ist in aller Regel nicht völlig gleichmäßig. Da die Stirnfläche der Schmelzelektrode aufgrund von Toleranzen zwangsläufig in einzelnen Bereichen einen geringfügig kleineren Abstand vom Schmelzgut hat als in den übrigen Bereichen, kommt es dort zu einem größeren Energiefluss. Die Wärmeeinwirkung auf das Schmelzgut lässt sich in einem hohen Maße vergleichmäßigen, da die Schmelzelektrode mittels eines Motors um eine vertikal verlaufende Drehachse drehbar ausgebildet ist. Hierdurch erhöht sich zusätzlich die Lebensdauer der Schmelzelektrode.

Da die Schmelzelektrode radial zu ihrer Drehachse verstellbar ausgebildet ist, überstreicht der Lichtbogen der Schmelzelektrode auch bei relativ großflächigen Schmelztiegeln die gesamte Oberfläche des Schmelzgutes auf einer kreisförmigen Bahn.

Zur Herstellung dentaler Gussteile ist es vorteilhaft, wenn der Schmelztiegel und die Schmelzelektrode in einem durch eine Vakuumpumpe evakuierbaren Rezipienten angeordnet sind, welcher durch eine Trennwand in zwei Kammern unterteilt ist, wobei in einer oberen Kammer der Schmelztiegel und die Schmelzelektrode und in einer unteren Kammer eine Gussmuffel angeordnet und die Gussmuffel zur Trennwand hin durch einen pneumatischen Zylinder zur Trennwand hin vorspannbar ist. Durch diese pneumatische Vorspannung der Gussmuffel gegen die Trennwand lässt sich eine sehr exakte Vorspannkraft erreichen. Dadurch ist ein zu hoher Druck auf die Gussmuffel ausgeschlossen, so dass man auf einen die Gussmuffel umgebenden Metallring verzichten kann.

Der in die Gussmuffel gegossene Werkstoff gelangt zuverlässig in alle von ihm auszufüllenden Räume, ohne dass die Gefahr von Lufteinschlüssen besteht, wenn die obere Kammer einen mit einer Überdruckquelle verbindbaren Überdruckanschluss hat.

Je nach den Eigenschaften der zu schmelzenden Werkstoffe ist es zweckmäßig, Schmelztiegel aus unterschiedlichen Materialien, insbesondere Kupfer, Graphit oder Keramik zu verwenden. Bei Schmelztiegeln aus keramischen Werkstoffen entsteht das Problem, dass diese elektrisch nicht leitend sind. Deshalb müssen zusätzliche Maßnahmen getroffen werden, um von der Schmelzelektrode zum Schmelzgut hin einen Lichtbogen zu erzeugen. Das ist besonders einfach möglich, wenn der Schmelztiegel aus einem elektrisch nicht leitenden Material besteht und mittig durch ihn hindurch eine mit dem Leistungsgenerator verbundene Gegenelektrode führt.

Die Erfindung lässt zahlreiche Ausführungsformen zu. Zur weiteren Verdeutlichung ihres Grundprinzips sind zwei davon schematisch in der Zeichnung dargestellt und werden nachfolgend beschrieben. Die Zeichnung zeigt in
- Fig.1: einen schematischen Vertikalschnitt durch eine Anlage mit einem Lichtbogen-Schmelzofen nach der Erfindung,
- Fig.2: einen Schnitt durch eine zweite Ausführungsform eines erfindungsgemäßen Lichtbogenschmelzofens,
- Fig.3: den Lichtbogen-Schmelzofen nach Figur 2 in einer zweiten Arbeitsstellung.

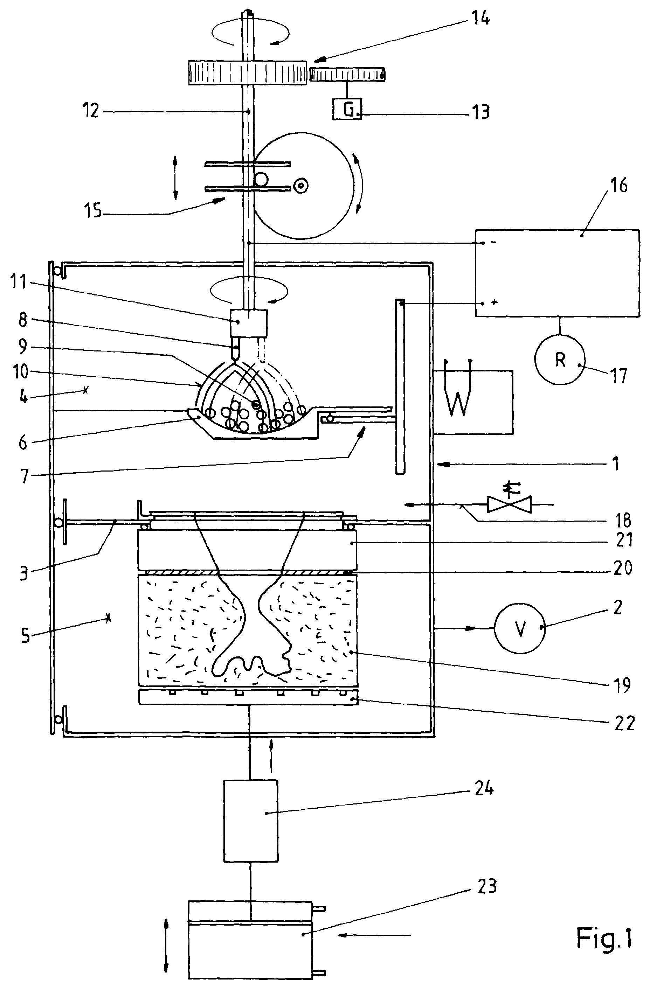

Die Figur 1 zeigt einen Rezipienten 1, welcher durch eine Vakuumpumpe 2 evakuierbar ist. Eine Trennwand 3 trennt den Rezipienten 1 in eine obere Kammer 4 und eine untere Kammer 5.

In der oberen Kammer 4 ist ein Schmelztiegel 6 angeordnet, welcher durch einen Kippmechanismus 7 in eine Ausgießstellung zu verschwenken ist. Oberhalb des Schmelztiegels 6 ist innerhalb des Rezipienten 1 eine Schmelzelektrode 8 angeordnet, welche zu im Schmelztiegel 6 befindlichem Schmelzgut 9 einen Lichtbogen 10 zu erzeugen vermag. Die Schmelzelektrode 9 ist zwischen einer mittigen Position und einer exzentrischen Position verstellbar auf einer Halterung 11 befestigt, welche an einer in den Rezipienten 1 hineinführenden Drehachse 12 vorgesehen ist. Die Drehachse 12 wird von einem Motor 13 mittels eines Getriebes 14 rotatorisch angetrieben. Dadurch bewegt sich die Schmelzelektrode 8 auf einer Kreisbahn oberhalb des Schmelztiegels 6. Strichpunktiert wurde in der Zeichnung die Position der Schmelzelektrode 8 nach einer 180°-Drehung der Drehachse 12 dargestellt.

Wichtig für die Erfindung ist weiterhin, dass die Drehachse 12 mittels einer Verstelleinrichtung 15 während des Arbeitens des Lichtbogen-Schmelzofens in Vertikalrichtung verstellbar ist. Dadurch kann man zum Zünden des Lichtbogens 10 die Schmelzelektrode 8 in eine Position bewegen, in der sie nur geringen Abstand vom Schmelzgut 9 hat.

Zur Energieversorung der Schmelzelektrode 8 dient ein Leistungsgenerator 16, welcher mit einem elektrischen Pol mit der Drehachse 12 und mit ihrem anderen elektrischen Pol mit dem Kippmechanismus 7 und damit mit dem Schmelztiegel 6 Verbindung hat. Zur Leistungsregelung des Leistungsgenerators 16 dient ein Regler 17. Ein Überdruckanschluss 18 ermöglicht es, die obere Kammer 4 mit einer Überdruckquelle zu verbinden.

In der unteren Kammer 5 befindet sich eine Gussmuffel 19, auf der unter Zwischenschaltung einer Dichtung 20 ein Trichterteil 21 aufliegt. Die Gussmuffel 19 steht auf einem Andrückteller 22, der von einem pneumatischen Zylinder 23 nach oben hin vorgespannt wird. Ein Druckregler 24 sorgt dabei für eine sehr genaue, konstante Andrückkraft, durch die die Gussmuffel 19 mit dem Trichterteil 21 gegen die Trennwand 3 vorgespannt wird.

Zu Beginn des Schmelzens einer Charge fährt man die Schmelzelektrode 8 in eine solche Position, in der sie geringen Abstand vom Schmelztiegel 6 hat und setzt sie durch den Motor 13 in eine umlaufende Drehbewegung. Dann fährt man mit dem Regler 17 die Spannung so weit hoch, dass ein elektrischer Lichtbogen 10 entsteht. Danach bewegt man mittels der Verstelleinrichtung 15 unter gleichzeitiger Erhöhung der elektrischen Spannung die Drehachse 12 so weit nach oben, dass der Lichtbogen 10 möglichst die gesamte Oberfläche des Schmelzgutes 9 überstreicht.

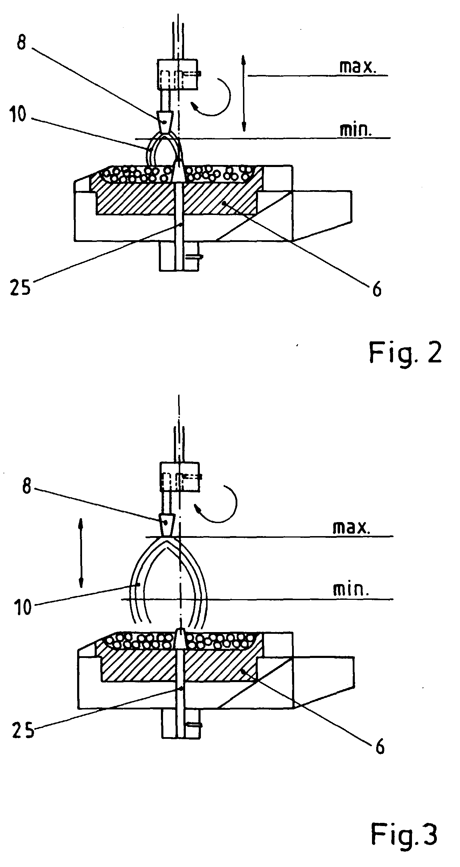

Bei der Ausführungsform nach Figur 1 wurde davon ausgegangen, dass der Schmelztiegel 6 aus einem elektrisch leitenden Material besteht, also beispielsweise aus Kupfer oder Graphit. Besteht er aus einem elektrisch nicht leitenden Material, beispielsweise Keramik, dann führt man, was die Figuren 2 und 3 zeigen, durch den Schmelztiegel 6 von unten her eine Gegenelektrode 25 hindurch, welche mit entgegengesetztem Potential verbunden wird wie die Schmelzelektrode 8. In Figur 2 ist die Schmelzelektrode 8 im geringstmöglichen Abstand zum Schmelztiegel 6 und in der Figur 3 im größtmöglichen Abstand dazu dargestellt. Man erkennt, dass im letzteren Fall der Lichtbogen 10 einen weit größeren Bereich des Schmelztiegels 6 zu überstreichen vermag als in der in Figur 2 gezeigten Position.

### Bezugszeichenliste

- 1: Rezipient
- 2: Vakuumpumpe
- 3: Trennwand
- 4: obere Kammer
- 5: untere Kammer
- 6: Schmelztiegel
- 7: Kippmechanismus
- 8: Schmelzelektrode
- 9: Schmelzgut
- 10: Lichtbogen
- 11: Halterung
- 12: Drehachse
- 13: Motor
- 14: Getriebe
- 15: Verstelleinrichtung
- 16: Leistungsgenerator
- 17: Regler
- 18: Überdruckanschluss
- 19: Gussmuffel
- 20: Dichtung
- 21: Trichterteil
- 22: Andrückteller
- 23: pneumatischer Zylinder
- 24: Druckregler
- 25: Gegenelektrode

## Patentansprüche

1. Lichtbogen-Schmelzofen mit einer oberhalb eines Schmelztiegels (6) angeordneten Schmelzelektrode (8), welche zur Erzeugung eines Lichtbogens (10) zwischen der Schmelzelektrode (8) und im Schmelztiegel (6) eingefülltem Schmelzgut (9) mit einem elektrischen Pol eines Leistungsgenerators (16) Verbindung hat, **dadurch gekennzeichnet**, dass die Schmelzelektrode während des Arbeitens des Lichtbogen-Schmelzofens(8) vertikal zu dem Schmelztiegel (6) verstellbar und mittels eines Motors (13) um eine vertikal verlaufende Drehachse (12) drehbar ausgebildet ist und zusätzlich radial zu ihrer Drehachse (12) verstellbar angeordnet ist.

2. Lichtbogen-Schmelzofen nach Anspruch 1, **dadurch gekennzeichnet**, dass der Schmelztiegel (6) und die Schmelzelektrode (8) in einem durch eine Vakuumpumpe (2) evakuierbaren Rezipienten (1) angeordnet sind, welcher durch eine Trennwand (3) in zwei Kammern (4, 5) unterteilt ist, wobei in einer oberen Kammer (4) der Schmelztiegel (6) und die Schmelzelektrode (8) und in einer unteren Kammer (5) eine Gussmuffel (19) angeordnet sind und die Gussmuffel (19) zur Trennwand (3) hin durch einen pneumatischen Zylinder (23) zur Trennwand (3) hin vorspannbar ist.

3. Lichtbogen-Schmelzofen nach Anspruch 2, **dadurch gekennzeichnet**, dass die obere Kammer (4) einen mit einer Überdruckquelle verbindbaren Überdruckanschluss (18) hat.

4. Lichtbogen-Schmelzofen nach zumindest einem der vorangehenden Ansprüche, **dadurch gekennzeichnet**, dass der Schmelztiegel (6) aus einem elektrisch nicht leitenden Material besteht und mittig durch ihn hindurch eine mit dem Leistungsgenerator (16) verbundene Gegenelektrode (25) führt.
